# EUROPEAN PATENT SPECIFICATION

(11) **EP 3 162 623 B1**
(45) Date of publication and mention of the grant of the patent: **13.02.2019**
(21) Application number: 16196239.4
(22) Date of filing: 28.10.2016
(51) Int. Cl.: B60N 2/809, B60N 2/885, B60N 2/28

(54) **HEADREST**
KOPFSTÜTZE
APPUI-TÊTE

(30) Priority: 28.10.2015 AU 2015904418
(43) Date of publication of application: 03.05.2017
(73) Proprietor: Dorel France, 49309 Cholet Cedex (FR)
(72) Inventor: Tat, Kim, South Melbourne, Victoria 3205 (AU)
(74) Representative: Vidon Brevets & Stratégie

(56) References cited:
- FR-A1- 2 962 081
- US-A- 6 116 691
- US-B1- 6 250 716

## Description

### Field of the invention

This invention relates generally to headrests. The invention has particular but not exclusive application to headrests for child restraints employed in vehicles.

### Background of the invention

A common form of vehicle child restraint is a seat with an inbuilt harness. The seat is typically secured in place by two or more of a vehicular lap-sash seat belt, a top tether strap to a tether anchorage point, and a pair of ISOFIX anchorages. Older children may be accommodated in a so called booster seat which does not include an inbuilt harness and must therefore be employed with a lap-sash seat belt even if a top tether or ISOFIX anchorage mounts are provided.

In recent years, attention has turned to the modification of child restraints such as harness seats and booster seats to provide better protection for the child's head from side impacts, e.g. with an adjacent door or other child, or arising from incursion by another vehicle or an object impacting the vehicle side on. For this purpose, improved headrests have been provided that include padded side wings spaced apart to accommodate a child's head between them. Where the child restraint is adjustable for children of different sizes, for example by adjusting the shoulder heights of harnesses, these headrests must in turn be adjustable to provide optimum protection for the child's head.

Every parent and care giver is familiar with a still common problem with child restraints in which the child is seated upright, i.e. the tendency of the child's head to fall forward and to toss about when the child falls asleep. Some child restraints have been provided with a seat recline facility in an attempt to address this problem: this does provide a partial solution by increasing the chance that the child's head will remain titled back but has the disadvantage that the necessary footprint to accommodate a reclined position increases the bulk of the restraint base. Good clearance from the seat in front is desirable to allow other children in the car to scramble past the child restraint and so avoid exiting or boarding the vehicle from the "wrong" side. The introduction of headrests as described above has limited the sideways range of head movement when a child falls asleep but the problem of forward head swinging and drooping remains. The driver or front seat passenger will on occasion attempt to push the child back because of a natural concern for the child's head movement, but this action itself is a safely issue in the case of the driver. Chin support members corresponding to preamble of claim 1 are disclosed in US6250716.

It is an object of the invention, at least in its application to vehicle child restraints, to at least in part alleviate the problem of head movement of a sleeping child in a vehicle child restraint of a kind in which the child is seated upright.

Reference to any prior art in the specification is not an acknowledgment or suggestion that this prior art forms part of the common general knowledge in any jurisdiction or that this prior art could reasonably be expected to be understood, regarded as relevant, and/or combined with other pieces of prior art by a skilled person in the art.

### Summary of the invention

The aforementioned problem is addressed in accordance with the invention by an adaptation of a headrest to provide an extendible chin and/or jaw support at each side of the child's face. This adaptation stems from an observation that when a child falls asleep in a child restraint seat, the child's head generally falls forward and tips somewhat to either left or right.

In particular, the invention provides a headrest assembly comprising:
a body;
a pair of side wings that project from the body and are spaced apart to accommodate a person's head between generally opposed inside faces of the side wings;
opposed chin support members mounted to the respective side wings for movement between a retracted condition adjacent the side wing and an extended and inclined condition in which they are positioned to provide a chin and/or jaw support for a person's head when accommodated between the side wings; and
a common or respective mechanisms, each including a hand operable actuator separate from the chin support members, operable to move the respective chin support members at least from their retracted condition to the extended condition.

Preferably, separate mechanisms are operable to separately and individually move the respective chin support members at least from their retracted condition to the extended condition.

Preferably, each chin support member is mounted for pivotal movement between its retracted and extended conditions about an axis adjacent an upper edge or face of the chin support member that is rearwardly and downwardly inclined when the headrest assembly is in its normal operative position. A chin support member thus mounted may typically be of greater height at its front than at its rear. This arrangement has been found effective in both supporting the person's head and maintaining it in a generally upright position.

Each chin support member preferably includes a pad defining a face that contacts the chin and/or jaw in the extended condition.

The respective mechanisms may be configured to define a plurality of extended and inclined conditions, for example at different angular positions relative to the retracted condition. These plural extended conditions may be defined by respective positions on an indexing arrangement. Further preferably, each position on the indexing arrangement may be such that a predetermined force against the chin support member will cause movement of the chin support member back towards its retracted condition. In this way, provision is made for easily retracting the chin support members while also ensuring that each chin support member returns to its optimally protective retracted condition in the event of an impact.

In a particularly useful application of the invention, the headrest assembly is sized and configured for use in a vehicular child restraint of the kind in which the child is seated generally upright. The invention therefore also provides, in an embodiment, a vehicular child restraint comprising a seat shell or frame with the aforesaid headrest assembly, where either the body of the headrest assembly is integral with the seat shell or frame or the headrest assembly is mounted to the seat shell or frame. In the latter case, the headrest assembly may advantageously be vertically adjustable to accommodate children of different heights, or to accommodate a child as the child grows.

The headrest body may comprise a back plate located between the pair of spaced apart side wings.

In illustrative embodiments, the chin support means are mounted for movement relative to the side wings. The chin support means may include chin-support pads. Each pad can be moved to extend inwardly to allow a child seated in a child restraint to rest their chin on one of the pads so that they have support for their head while they are sleeping. The first chin-support pad is mounted on a first side wing for pivotable movement about a positively sloping inclined first pad pivot axis toward the second side wing from a retracted position alongside the first side wing to an extended and inclined position away from the first side wing. The second chin-support pad is mounted on the second side wing for pivotable movement about a positively sloping inclined second pad pivot axis toward the first side wing from a retracted position alongside the second side wing to an extended and inclined position away from the second side wing.

In illustrative embodiments, the mechanisms operable to move the chin support members and configured to move the chin-support pads about the pad pivot axes and maintain the chin-support pads in a selected extended and inclined position until the head of a child seated in a seat associated with the headrest is moved to apply a pad-retraction force in excess of a predetermined force to cause the chin-support pad to pivot toward its retracted position.

The invention also provides a child restraint for a mobile vehicle, the restraint comprising:
a headrest including a first side wing, a second side wing arranged to lie in spaced-apart relation to the first side wing, and a back plate arranged to extend between the first and second side wings and cooperate with the first and second side wings to define a head-receiving space therebetween;
a first chin-support pad mounted on the first side wing for pivotable movement about a positively sloping inclined first pad pivot axis toward the second side wing from a retracted position alongside the first side wing to an extended and inclined position away from the first side wing to provide support for a first side of a chin of a child of the child restraint; and
a second chin-support pad mounted on the second side wing for pivotable movement about a positively sloping inclined second pad pivot axis toward the first side wing from a retracted position alongside the second side wing to an extended and inclined position away from the first side wing to provide support for an opposition second side of a chin of the child of the child restraint.

In illustrative embodiments, the restraint further comprises a first pad mover associated with a first side wing and configured to move the first chin-support pad about the positively sloping inclined first pad pivot axis from the retracted position to the extended and inclined position and a second pad mover associated with the second side wing and configured to move the second chin-support pad about the positively sloping inclined second pad pivot axis from the retracted position to the extended and inclined position.

In illustrative embodiments, the first pad mover is configured to provide means for maintaining the first chin-support pad in the extended and inclined position until a pad-retraction force in excess of a predetermined force is applied to the first chin-support pad by a moving head of a child of the child restraint so that application of such a pad-retraction force causes the first chin-support pad to pivot about the positively sloping inclined first pad pivot axis toward the retracted position.

In illustrative embodiments, the second pad mover is configured to provide means for maintaining the second chin-support pad in the extended and inclined position until a pad-retraction force in excess of a predetermined force is applied to the second chin-support pad by a moving head of a child of the child restraint so that application of such a pad-retraction force causes the second chin-support pad to pivot about the positively sloping inclined second pad pivot axis toward the retracted position.

As used herein, except where the context requires otherwise the term 'comprise' and variations of the term, such as 'comprising', 'comprises' and 'comprised', are not intended to exclude other additives, components, integers or steps.

### Brief description of the drawings

The invention will now be described in further detail, by way of example only, with reference to the accompanying drawings in which:
Figure 1 is a front view of a headrest assembly according to an embodiment of the invention, shown with its respective chin support members fully retracted;
Figure 2 is a view similar to Figure 1 but showing the chin support member on one side wing in an extended condition;
Figure 3 is an exploded front perspective view of the headrest assembly;
Figure 4 is an exploded rear perspective view corresponding to Figure 3;
Figure 5 is a fragmentary view of one of the similar mechanisms operable to move a respective chin support member from its retracted to its extended condition;
Figures 6-8 are fragmentary views of the mechanism in situ on its cover, viewed from inside the cover and shown in successive operative positions; and
Figure 9 is a front perspective view of a child restraint seat shell fitted with the headrest of Figures 1 to 4.

### Detailed description of the embodiments

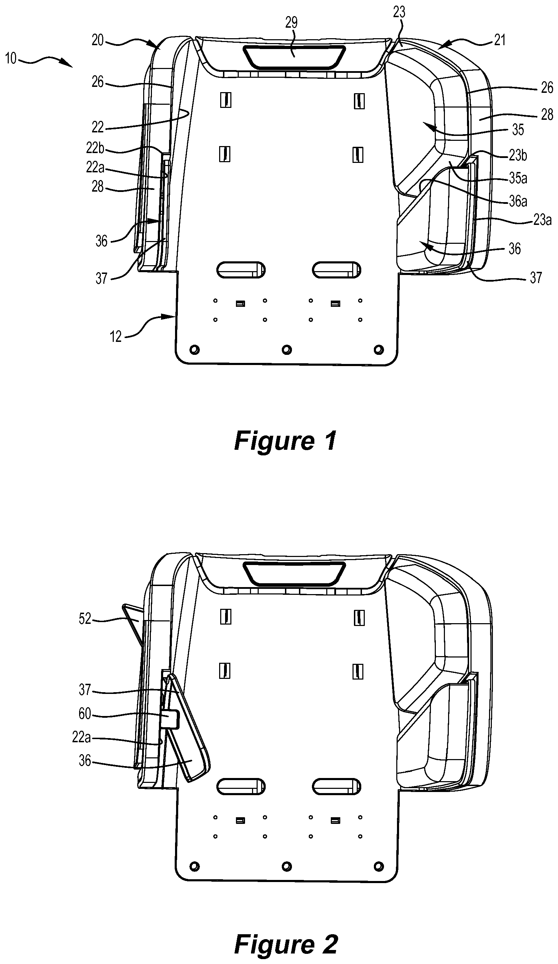

The general structure and configuration of the illustrated headrest assembly 10 is best appreciated from Figures 1, 3 and 4 of the appended drawings. The headrest assembly includes a body in the form of a moulded shell 12 of a suitably hard and strong plastics material. Shell 12 includes a back plate portion 14 that extends generally vertically in situ, and a pair of side wings 20, 21 that project integrally from upright side edges of back plate 14 and are spaced apart to accommodate a child's head between generally opposed inside faces 22, 23 of the side wings. The side wings merge into the back portion 14 at curved corner regions 24, 25, and rigidity is provided by multiple spaced shallow ribs 16 that extend around the outside of both back plate portion 14 and side wings 20, 21.

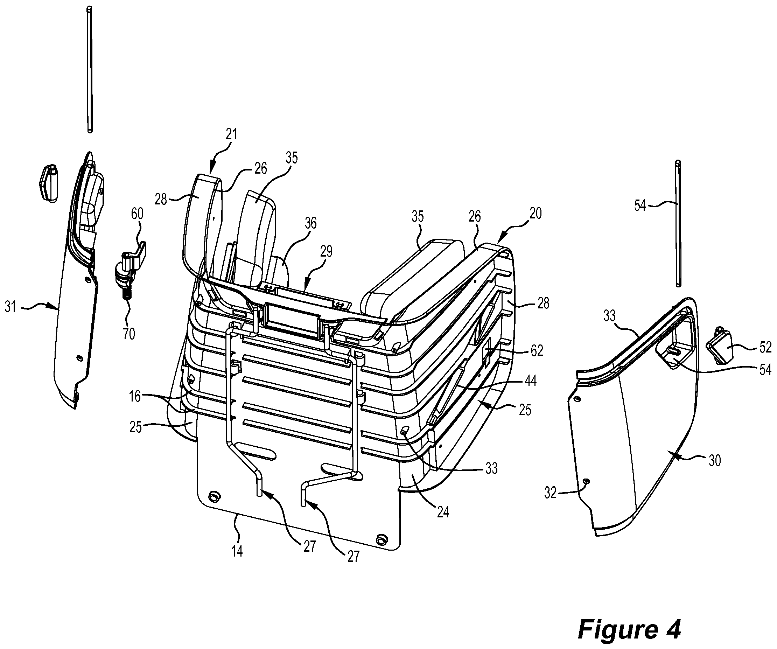

Side wings 20, 21 are not parallel but flare outwardly at a shallow angle, in this case about 20°. This angle may of course vary. Each side wing is bounded by a continuous edge 26 that extends in a partial curve along the top, front and bottom sides. Edge 26 carries an outside flange 28 that lies substantially normal to inside face 22, 23 and defines within it a chamber 25 that is closed on the outside of the side wing by a respective suitably shaped and rimmed cover 30, 31. Each cover 30, 31 is a moulded piece profiled with a peripheral lip 33 that snugly fits to flange 28. The cover 30, 31 is secured in place at the rear by screws (not shown) that engage respective holes 32 in the cover to threaded integral sockets 33 on moulded shell 12 (Figure 4).

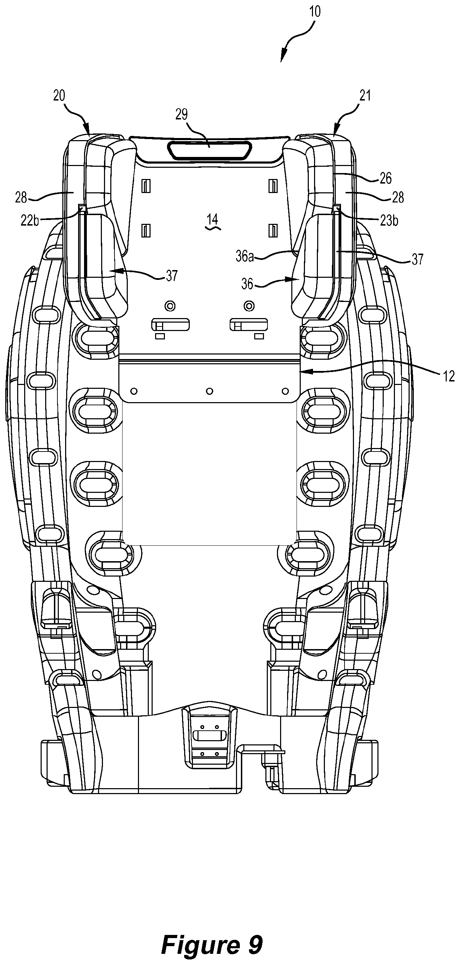

Figure 9 depicts a vehicle child restraint shell in the form of an upright seat 100 with a built-in harness and in which a headrest assembly 10 is adjustably mounted to the shell of the seat. Such a vertical adjustment of the headrest allows children of different heights to be properly accommodated in the seat with the headrest at the correct height, or allows a seat used by a particular child to be adjusted as the child grows. The adjustment mechanism is typically on the back of the headrest assembly but a rear view in Figure 4 does not show this adjustment mechanism except for a pair of vertically aligned rotatable crank rods 27 that are rotated by depressing an elongate button 29 at the top of back plate 14. Depression of this button 29 rotates crank rods 27 to release locking devices and so allow the headrest to be moved up or down, typically to indexed positions matching a plurality of possible positions of the harness.

As will be appreciated, the headrest assembly is typically fitted with a suitable fabric and light padding to form the end product.

The inside faces 22, 23 of side wings 20, 21 each mount a pair of pad members or cushions, i.e. an upper stationary or fixed cushion 35 and a lower, adjustable chin support pad 36. Fixed cushions 35 are vertically longer at the rear than at the front while chin support pads 36 are the converse, vertically longer at the front than at the rear. They are thus complementary and spaced apart between parallel opposed edge faces 35a, 36a that are inclined rearwardly and downwardly at about 20°C to 30°C. Fixed cushions 35 are positioned proud of side wing faces 22, 23 by suitable internal frames fixed to back plate 14 (not shown).

Each chin support pad 36 is fixed to a back plate 37. Each back plate 37 in turn sits substantially flush in a complementary shallow recessed portion 22a, 23a of inside face 22, 23 defined by an inclined shoulder 22b, 23b that extends parallel to the edge faces 35a, 36a of cushions 35 and pads 36. A pair of projections 40 each comprising a cylindrical rod portion 41 and an intervening connecting web 42 are located through respective slots in shoulder 22b, 23b and retained in position while free to rotate by respective cleats 44 on the inside face of the adjacent cover 30, 31. The outer edge of these cleats 44 has a concave profile to match and seat the rod portions 41.

In this manner chin support pad 36 is able to rotate on the inclined common axis of rod portions 41 between a fully retracted condition adjacent and aligned with side wing 20, 21 and a number of extended and inclined conditions at varying rotational positions outwardly of the side wing, up to 45° relative to the fully retracted condition. One of these extended conditions is illustrated in Figure 2. In one or more of the extended conditions, the chin support pad is positioned to provide a chin and/or jaw support for the head of a child when accommodated between side wings 20, 21. Accordingly, the chin support pads 36 pivot about respective positively sloping non-horizontal pivot axes towards the opposing side wing. The axis are non-parallel.

Respective mechanisms 50 are provided at side wings 20, 21 for moving the respective chin support pads 36 from their retracted condition to their extended conditions. Each mechanism includes a hand operable lever actuator 52 separate from the associated chin support pad, and an indexing arrangement that defines a number of selectable extended positions of the chin support member at which a predetermined force on pad 36 will be effective to move the chin support pad back to the retracted condition.

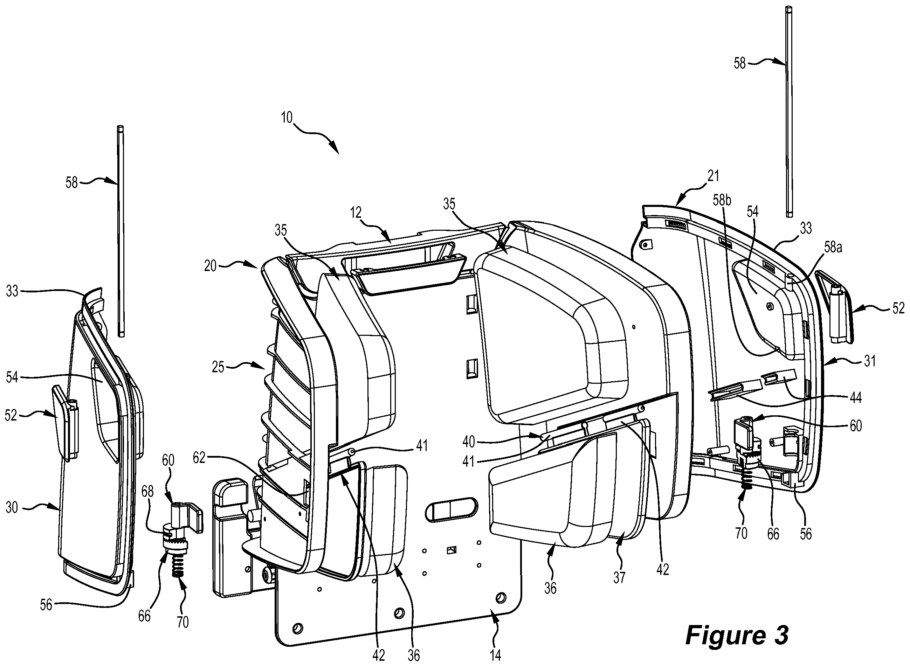

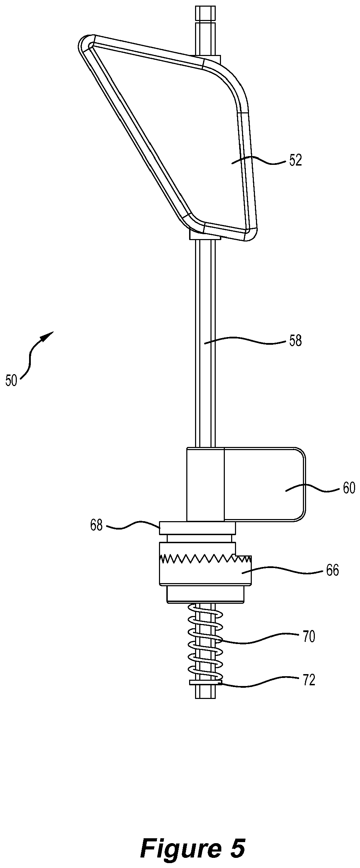

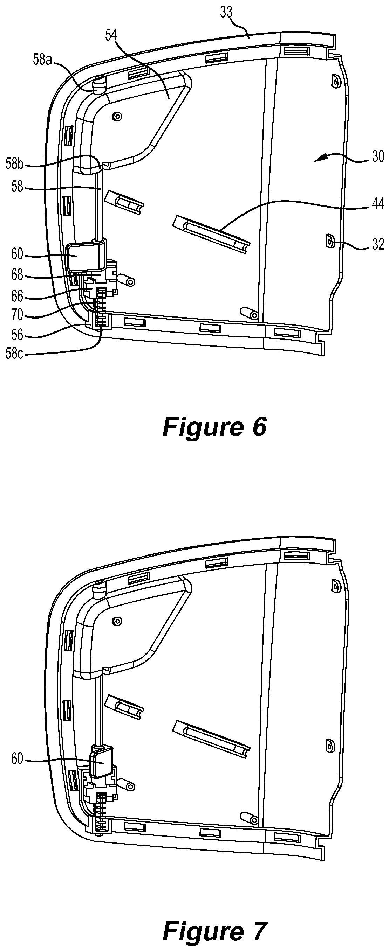

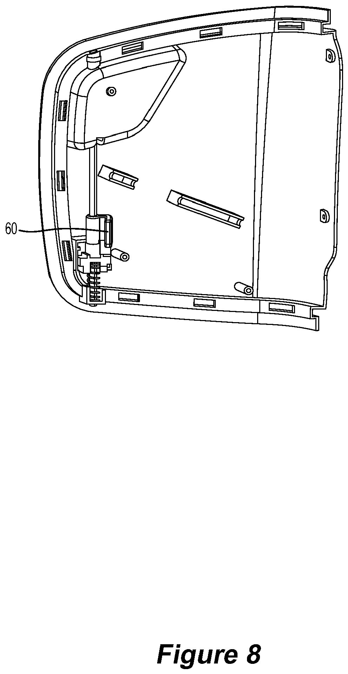

Mechanism 50 is best seen in situ in Figures 6 to 8, while its separate components are shown apart in the exploded views of Figures 3 and 4. The assembled mechanism is shown in isolation in a separate drawing in Figure 5. Each mechanism 50 is mounted on a respective cover 30, 31, which is provided with two mounting features, i.e. an enclosed well 54 in the outer face of the cover adjacent to the outer top corner of the cover, and an integral bracket 56 on the inside face 22, 23 at the outer bottom corner. The mechanism is wholly assembled on a D-section or other keyed shaft 58 that extends vertically through respective apertures 58a, 58b in the peripheral wall of well 54 and an aperture 58c in the base wall of bracket 56.

Shaft 58 is locked against translational movement and irrotationally carries lever actuator 52 shaped to fit into well 54 so that it can be easily gripped by a hand and pulled outwardly to rotate the shaft. This action in turn rotates an L-shaped paddle 60 that projects through an aperture 62 in the adjacent side wing 20, 21 to contact the rear of chin support back plate 37. Thus when lever actuator 52 is pulled out, paddle 60 is rotated (Figure 7) to push the plate 37, so that chin support pad 36 rotates outwardly (Figure 2) on the inclined axis defined by its rod members 41. Figures 6 to 8 show successive positions of the mechanism as the lever actuator is pulled out.

A spring loaded indexing mechanism is provided on shaft 58 below paddle 60. A toothed detent disc 66 has an upper annular rim of v-section teeth complementary to v-section teeth on a bracket 68 secured to the inside wall of the cover. The detent disc 66 is biased into engagement with the bracket teeth by a helical compression spring 70 carried by shaft 58 between a blind bore on disc 66 and a collar 72 on the shaft. As hand lever actuator 52 is rotated with sufficient force to overcome the spring force, detent disc 66 indexes along the teeth of bracket 68 so that each tooth engaged position defines an indexed position of chin support pad 36. Conversely, spring 70 is set so that the chin support pad 36 will not retract when a sleeping child's face is being supported by the chin support pad but, if sufficient force is applied against the chin support pad, deliberately by hand or during an impact, detent disc 66 will index in reverse to allow the chin support pad to retract as paddle 60 is pushed back and lever actuator 54 rotates back into its well.

It will be appreciated that the illustrated headrest advantageously addresses the problem of providing head support for a sleeping child seated in a child restraint. The respective chin support pads are independently movable to a range of selective positions to support the chin and/or jaw of the child whose head is tending to droop forwardly and sideways while asleep. The tapered inclined shape of each chin support pad helps to both support the head and incline it rearwardly. The mechanism for extending the chin support pad involves hand activation of a simple lever, and the arrangement is such that at each indexed position the chin support pad is easily returnable to its retracted condition by overcoming the spring force of the indexing mechanism.

It will be understood that the invention disclosed and defined in this specification extends to all alternative combinations of two or more of the individual features mentioned or evident from the text or drawings. All of these different combinations constitute various alternative aspects of the invention.

## Claims

1. A headrest assembly comprising:
a body (12);
a pair of side wings (20, 21) that project from the body and are spaced apart to accommodate a person's head between generally opposed inside faces (22, 23) of the side wings;
opposed chin support members (36) mounted to the respective side wings for movement between a retracted condition adjacent the side wing and an extended and inclined condition in which they are positioned to provide a chin and/or jaw support for a person's head when accommodated between the side wings;
**characterized in that** it comprises a common or respective mechanisms (50), each including a hand operable actuator (52) separate from the chin support members (36), operable to move the respective chin support members at least from their retracted condition to the extended condition.

2. A headrest assembly according to claim 1, wherein said common or respective mechanisms (50) comprise separate mechanisms operable to separately and individually move the respective chin support members at least from their respective retracted condition to the extended condition.

3. A headrest assembly according to claim 1 or 2, wherein each said chin support member (36) is mounted for pivotal movement between its retracted and extended conditions about an axis adjacent an upper edge or face of the chin support member that is rearwardly and downwardly inclined when the headrest assembly is in its normal operative position.

4. A headrest assembly according to claim 3, wherein one or both of said chin support members (36) is of greater height at its front than at its rear.

5. A headrest assembly according to any one of the claims 1 to 4, wherein each chin support member (36) includes a pad (36) defining a face that contacts the chin and/or jaw in the extended condition.

6. A headrest assembly according to any one of claims 1 to 5, wherein the or each said mechanism (50) is configured to define a plurality of extended and inclined conditions, for example at different angular positions relative to the retracted condition.

7. A headrest assembly according to claim 6, wherein said plurality of extended conditions are defined by respective positions on an indexing arrangement.

8. A headrest assembly according to claim 7, wherein each of the positions on the indexing arrangement is such that a predetermined force against the chin support member will cause movement of the chin support member back towards its retracted condition.

9. A headrest assembly according to any one of claims 1 to 8, sized and configured for use in a vehicular child restraint of the kind in which the child is seated generally upright.

10. A vehicular child restraint comprising a seat shell or frame with a headrest assembly according to any one of claims 1 to 9, wherein either the body of the headrest assembly is integral with the seat shell or frame or the headrest assembly (12) is mounted to the seat shell or frame.

11. A vehicular child restraint according to claim 10, wherein the headrest assembly (12) is mounted to the seat shell or frame and is vertically adjustable to accommodate children of different heights, or to accommodate a child as the child grows.

12. A child restraint for a mobile vehicle, the restraint comprising:
a headrest (12) including a first side wing (20), a second side wing (22) arranged to lie in spaced-apart relation to the first side wing, and a back plate (14) arranged to extend between the first and second side wings and cooperate with the first and second side wings to define a head-receiving space therebetween;
a first chin-support pad mounted on the first side wing (20) for pivotable movement about a positively sloping inclined first pad pivot axis toward the second side wing (21) from a retracted position alongside the first side wing to an extended and inclined position away from the first side wing to provide support for a first side of a chin of a child of the child restraint;
a second chin-support pad (36) mounted on the second side wing (21) for pivotable movement about a positively sloping inclined second pad pivot axis toward the first side wing (20) from a retracted position alongside the second side wing to an extended and inclined position away from the first side wing to provide support for an opposition second side of a chin of the child of the child restraint; and
a first pad mover (52) associated with a first side wing and configured to move the first chin-support pad about the positively sloping inclined first pad pivot axis from the retracted position to the extended and inclined position and a second pad mover associated with the second side wing and configured to move the second chin-support pad about the positively sloping inclined second pad pivot axis from the retracted position to the extended and inclined position.

13. The restraint of claim 12, wherein the first pad mover (52) is configured to provide means for maintaining the first chin-support pad (36) in the extended and inclined position until a pad-retraction force in excess of a predetermined force is applied to the first chin-support pad (36) by a moving head of a child of the child restraint so that application of such a pad-retraction force causes the first chin-support pad (36) to pivot about the positively sloping inclined first pad pivot axis toward the retracted position.

14. The restraint of claim 13, wherein the second pad mover (52) is configured to provide means for maintaining the second chin-support pad (36) in the extended and inclined position until a pad-retraction force in excess of a predetermined force is applied to the second chin-support pad (36) by a moving head of a child of the child restraint so that application of such a pad-retraction force causes the second chin-support pad (36) to pivot about the positively sloping inclined second pad pivot axis toward the retracted position.

## Patentansprüche

1. Kopfstützenanordnung, umfassend:
einen Körper (12);
ein Paar von Seitenflügeln (20, 21), die sich von dem Körper erstrecken und getrennt voneinander angeordnet sind, um einen Kopf einer Person zwischen im Wesentlichen gegenüberliegenden inneren Flächen (22, 23) der Seitenflügel aufzunehmen;
gegenüberliegende Kinnunterstützungselemente (36), die auf den jeweiligen Seitenflügeln montiert sind und zwischen einem eingezogenen Zustand neben dem Seitenflügel und einem ausgefahrenen und geneigten Zustand bewegbar sind, in welchem sie angeordnet sind, um eine Kinn- und/oder Kieferunterstützung für einen Kopf einer Person, wenn dieser zwischen den Seitenflügeln angeordnet ist, bereitzustellen;
**dadurch gekennzeichnet, dass** sie einen gemeinsamen oder jeweilige Mechanismen (50) aufweist, die jeweils einen handbetätigbaren Aktuator (52) aufweisen, der von den Kinnunterstützungselementen (36) getrennt ist und betätigbar ist, um die jeweiligen Kinnunterstützungselemente wenigstens aus deren eingefahrenem Zustand in den ausgefahrenen Zustand zu bewegen.

2. Kopfstützenanordnung nach Anspruch 1, wobei der gemeinsame oder die jeweiligen Mechanismen (50) getrennte Mechanismen aufweist, die betätigbar sind, die jeweiligen Kinnunterstützungselemente wenigstens aus deren eingefahrenem Zustand in den ausgefahrenen Zustand getrennt und individuell zu bewegen.

3. Kopfstützenanordnung nach Anspruch 1 oder 2, wobei jedes der Kinnunterstützungselemente (36) zur schwenkbaren Bewegung zwischen seinem eingefahrenen und ausgefahrenen Zustand um eine an eine obere Kante oder Fläche des Kinnunterstützungselementes angrenzende Achse montiert ist, die rückwärtig und nach unten geneigt ist, wenn sich die Kopfstützenanordnung in ihrer normalen Betriebsposition befindet.

4. Kopfstützenanordnung nach Anspruch 3, wobei eines oder beide der Kinnunterstützungselemente (36) eine größere Höhe an seiner Vorderseite als an seiner Hinterseite aufweist.

5. Kopfstützenanordnung nach einem der Ansprüche 1 bis 4, wobei jedes Kinnunterstützungselement (36) ein Kissen (36) aufweist, das eine Fläche definiert, die das Kinn und/oder den Kiefer in dem ausgefahrenen Zustand berührt.

6. Kopfstützenanordnung nach einem der Ansprüche 1 bis 5, wobei der oder jeder der Mechanismen (50) dazu eingerichtet ist, eine Vielzahl von ausgefahrenen und geneigten Zuständen zu definieren, beispielsweise mit unterschiedlichen Winkelpositionen bezüglich des eingefahrenen Zustands.

7. Kopfstützenanordnung nach Anspruch 6, wobei die Vielzahl der ausgefahrenen Zustände durch jeweilige Positionen auf einer Indexierungsanordnung definiert sind.

8. Kopfstützenanordnung nach Anspruch 7, wobei jede der Positionen auf der Indexierungsanordnung derart ist, dass eine vorbestimmte Kraft gegen das Kinnunterstützungselement eine Bewegung des Kinnunterstützungselementes zurück in Richtung seines eingefahrenen Zustands verursacht.

9. Kopfstützenanordnung nach einem der Ansprüche 1 bis 8, dimensioniert und eingerichtet zur Verwendung in einem Kindersitz eines Fahrzeugs der Art, in welchem das Kind im Wesentlichen aufrecht sitzt.

10. Fahrzeugkindersitz umfassend eine Sitzschale oder einen Rahmen mit einer Kopfstützenanordnung nach einem der Ansprüche 1 bis 9, wobei entweder der Körper der Kopfstützenanordnung integral mit der Sitzschale oder dem Rahmen ist oder die Kopfstützenanordnung (12) an der Sitzschale oder dem Rahmen montiert ist.

11. Fahrzeugkindersitz nach Anspruch 10, wobei die Kopfstützenanordnung (12) an die Sitzschale oder den Rahmen montiert ist und vertikal anpassbar ist, um Kinder verschiedener Größen unterzubringen, oder ein Kind, das älter wird, unterzubringen.

12. Kindersitz für ein mobiles Fahrzeug, wobei der Kindersitz aufweist:
eine Kopfstütze (12) umfassend einen ersten Seitenflügel (20), einen zweiten Seitenflügel (22), der angeordnet ist, in räumlich getrennter Beziehung zu dem ersten Seitenflügel zu liegen, und eine Rückplatte (14), die angeordnet ist, sich zwischen dem ersten und zweiten Seitenflügel zu erstrecken und mit dem ersten und zweiten Seitenflügel zusammenzuwirken, um einen dazwischen angeordneten, einen Kopf aufnehmenden Bereich zu definieren;
ein erstes Kinnunterstützungskissen, das auf dem ersten Seitenflügel (20) zum schwenkbaren Bewegen um eine positiv abfallende geneigte erste Kissenschwenkachse in Richtung des zweiten Seitenflügels (21) aus einer eingefahrenen Position entlang des ersten Seitenflügels zu einer ausgefahrenen und geneigten Position weg von dem ersten Seitenflügel montiert ist, um eine Unterstützung für eine erste Seite eines Kinns des Kindes des Kindersitzes bereitzustellen;
ein zweites Kinnunterstützungskissen (36), das auf dem zweiten Seitenflügel (21) zum schwenkbaren Bewegen um eine positiv abfallende geneigte zweite Kissenschwenkachse in Richtung des ersten Seitenflügels (20) von einer eingefahrenen Position entlang des zweiten Seitenflügels zu einer ausgefahrenen und geneigten Position weg von dem ersten Seitenflügel montiert ist, um eine Unterstützung für eine gegenüberliegende zweite Seite eines Kinns des Kindes des Kindersitzes bereitzustellen; und
einen ersten Kissenbeweger (52), der einem ersten Seitenflügel zugeordnet und dazu eingerichtet ist, das erste Kinnunterstützungskissen um die positiv abfallende geneigte erste Kissenschwenkachse von der eingefahrenen Position zu der ausgefahrenen und geneigten Position zu bewegen, und einen zweiten Kissenbeweger, der dem zweiten Seitenflügel zugeordnet und dazu eingerichtet ist, das zweite Kinnunterstützungskissen um die positiv abfallende geneigte zweite Kissenschwenkachse von der eingefahrenen Position zu der ausgefahrenen und geneigten Position zu bewegen.

13. Kindersitz nach Anspruch 12, wobei der erste Kissenbeweger (52) dazu eingerichtet ist, Mittel zum Halten des ersten Kinnunterstützungskissens (36) in der ausgefahrenen und geneigten Position bereitzustellen, bis eine Kissenrückstellkraft, die eine vorbestimmte Kraft überschreitet, auf das erste Kinnunterstützungskissen (36) durch einen sich bewegenden Kopf eines Kindes in dem Kindersitz angewandt wird, sodass die Anwendung einer derartigen Kissenrückstellkraft verursacht, dass sich das erste Kinnunterstützungskissen (36) um die positiv ansteigende geneigte erste Kissenschwenkachse in Richtung der eingefahrenen Position schwenkt.

14. Kindersitz nach Anspruch 13, wobei der zweite Kissenbeweger (52) dazu eingerichtet ist, Mittel zum Halten des zweiten Kinnunterstützungskissens (36) in der ausgefahrenen und geneigten Position bereitzustellen, bis eine Kissenrückstellkraft, die eine vorbestimmte Kraft überschreitet, auf das zweite Kinnunterstützungskissen (36) durch einen sich bewegenden Kopf eines Kindes des Kindersitzes angewandt wird, sodass die Anwendung einer derartigen Kissenrückstellkraft verursacht, dass sich das zweite Kinnunterstützungskissen (36) um die positiv ansteigende geneigte zweite Kissenschwenkachse in Richtung der eingefahrenen Position schwenkt.

## Revendications

1. Ensemble à appuie-tête, comprenant :
un corps (12) ;
une paire d'ailes latérales (20, 21) qui font saillie à partir du corps et sont espacées l'une de l'autre pour loger la tête d'une personne entre des faces intérieures généralement opposées (22, 23) des ailes latérales ;
des éléments de support de menton opposés (36) montés sur les ailes latérales respectives pour le mouvement entre une condition rétractée adjacente à l'aile latérale et une condition étendue et inclinée dans laquelle ils sont positionnés pour fournir un support de menton et/ou de mâchoire pour la tête d'une personne lorsqu'elle est logée entre les ailes latérales ;
**caractérisé en ce qu'**il comprend un mécanisme commun ou des mécanismes respectifs (50), chacun incluant un actionneur actionnable à main (52) séparé des éléments de support de menton (36), actionnable pour déplacer les éléments de support de menton respectifs au moins de leur condition rétractée à la condition étendue.

2. Ensemble à appuie-tête selon la revendication 1, dans lequel ledit mécanisme commun ou lesdits mécanismes respectifs (50) comprennent des mécanismes séparés actionnables pour déplacer séparément et individuellement les éléments de support de menton respectifs au moins de leur condition rétractée respective à la condition étendue.

3. Ensemble à appuie-tête selon la revendication 1 ou 2, dans lequel chaque dit élément de support de menton (36) est monté pour le mouvement pivotant entre ses conditions rétractée et étendue autour d'un axe adjacent à un bord supérieur ou une face supérieure de l'élément de support de menton qui est incliné vers l'arrière et vers le bas lorsque l'ensemble à appuie-tête est dans sa position fonctionnelle normale.

4. Ensemble à appuie-tête selon la revendication 3, dans lequel un ou les deux desdits éléments de support de menton (36) est de hauteur plus grande à son avant qu'à son arrière.

5. Ensemble à appuie-tête selon l'une quelconque des revendications 1 à 4, dans lequel chaque élément de support de menton (36) inclut un coussinet (36) définissant une face qui entre en contact avec le menton et/ou la mâchoire dans la condition étendue.

6. Ensemble à appuie-tête selon l'une quelconque des revendications 1 à 5, dans lequel ledit, ou chaque dit, mécanisme (50) est configuré pour définir une pluralité de conditions étendues et inclinées, par exemple à différentes positions angulaires par rapport à la condition rétractée.

7. Ensemble à appuie-tête selon la revendication 6, dans lequel ladite pluralité de conditions étendues sont définies par des positions respectives sur un agencement d'indexage.

8. Ensemble à appuie-tête selon la revendication 7, dans lequel chacune des positions sur l'agencement d'indexage est telle qu'une force prédéterminée contre l'élément de support de menton entraîne le mouvement de l'élément de support de menton de retour vers sa condition rétractée.

9. Ensemble à appuie-tête selon l'une quelconque des revendications 1 à 8, dimensionné et configuré pour l'utilisation dans un dispositif de retenue d'enfant pour véhicule du type dans lequel l'enfant est assis de façon généralement droite.

10. Dispositif de retenue d'enfant pour véhicule comprenant une coque ou un cadre de siège avec un ensemble à appuie-tête selon l'une quelconque des revendications 1 à 9, dans lequel le corps de l'ensemble à appuie-tête est monobloc avec la coque ou le cadre de siège ou l'ensemble à appuie-tête (12) est monté sur la coque ou le cadre de siège.

11. Dispositif de retenue d'enfant pour véhicule selon la revendication 10, dans lequel l'ensemble à appuie-tête (12) est monté sur la coque ou le cadre de siège et est verticalement ajustable pour loger des enfants de hauteurs différentes, ou pour loger un enfant au fur et à mesure que l'enfant grandit.

12. Dispositif de retenue d'enfant pour un véhicule mobile, le dispositif de retenue comprenant :
un appuie-tête (12) incluant une première aile latérale (20), une seconde aile latérale (22) agencée pour être en relation espacée par rapport à la première aile latérale, et une plaque arrière (14) agencée pour s'étendre entre les première et seconde ailes latérales et coopérer avec les première et seconde ailes latérales pour définir un espace de réception de tête entre celles-ci ;
un premier coussinet de support de menton monté sur la première aile latérale (20) pour le mouvement pivotant autour d'un axe de pivotement de premier coussinet incliné positivement en pente vers la seconde aile latérale (21) d'une position rétractée à côté de la première aile latérale à une position étendue et inclinée éloignée de la première aile latérale pour fournir un support pour un premier côté d'un menton d'un enfant du dispositif de retenue d'enfant ;
un second coussinet de support de menton (36) monté sur la seconde aile latérale (21) pour le mouvement pivotant autour d'un axe de pivotement de second coussinet incliné positivement en pente vers la première aile latérale (20) d'une position rétractée à côté de la seconde aile latérale à une position étendue et inclinée éloignée de la première aile latérale pour fournir un support pour un second côté opposé d'un menton de l'enfant du dispositif de retenue d'enfant ; et
un élément de déplacement de premier coussinet (52) associé à une première aile latérale et configuré pour déplacer le premier coussinet de support de menton autour de l'axe de pivotement de premier coussinet incliné positivement en pente de la position rétractée à la position étendue et inclinée et un élément de déplacement de second coussinet associé à la seconde aile latérale et configuré pour déplacer le second coussinet de support de menton autour de l'axe de pivotement de second coussinet incliné positivement en pente de la position rétractée à la position étendue et inclinée.

13. Dispositif de retenue selon la revendication 12, dans lequel l'élément de déplacement de premier coussinet (52) est configuré pour fournir un moyen pour maintenir le premier coussinet de support de menton (36) dans la position étendue et inclinée jusqu'à ce qu'une force de rétraction de coussinet supérieure à une force prédéterminée soit appliquée sur le premier coussinet de support de menton (36) par une tête en mouvement d'un enfant du dispositif de retenue d'enfant de telle sorte que l'application d'une telle force de rétraction de coussinet fasse en sorte que le premier coussinet de support de menton (36) pivote autour de l'axe de pivotement de premier coussinet incliné positivement en pente vers la position rétractée.

14. Dispositif de retenue de la revendication 13, dans lequel l'élément de déplacement de second coussinet (52) est configuré pour fournir un moyen pour maintenir le second coussinet de support de menton (36) dans la position étendue et inclinée jusqu'à ce qu'une force de rétraction de coussinet supérieure à une force prédéterminée soit appliquée sur le second coussinet de support de menton (36) par une tête en mouvement d'un enfant du dispositif de retenue d'enfant de telle sorte que l'application d'une telle force de rétraction de coussinet fasse en sorte que le second coussinet de support de menton (36) pivote autour de l'axe de pivotement de second coussinet incliné positivement en pente vers la position rétractée.
